# EUROPÄISCHE PATENTANMELDUNG

(11) **EP 1 106 225 A1**
(43) Veröffentlichungstag der Anmeldung: **13.06.2001**
(21) Anmeldenummer: 00126347.4
(22) Anmeldetag: 02.12.2000
(51) Int. Cl.: B01D 24/04, B01D 35/30, C02F 1/28

(54) **Druckwasserfilter**

(30) Priorität: 06.12.1999 DE 19958649
(71) Anmelder: Brita GmbH, 65232 Taunusstein (DE)
(72) Erfinder: Malsy, Jürgen, 63110 Rodgau (DE); Heitele, Dr. Bernd, 65232 Taunusstein (DE)
(74) Vertreter: Weber, Dieter, Dr.

(57) **Zusammenfassung**

Die vorliegende Erfindung betrifft einen Wasserfilter für unter Druck stehendes Wasser mit einem druckfesten Wasserzulauf und einem entsprechenden Wasserabgang, sowie mit einem Aufnahmebehälter für Filtermaterial, welches so angeordnet ist, daß es von dem vom Wasserzulauf zum Wasserabgang hindurchtretenden Wasser zwangsweise durchströmt wird. Um einen Wasserfilter bzw. einen Behälter für einen Wasserfilter zu schaffen, bei welchem die Logistikkosten für Herstellung, Bevorratung und Austausch von Behältern mit verbrauchtem Filtermaterial beträchtlich vermindert werden, wird erfindungsgemäß vorgeschlagen, daß der Aufnahmebehälter als druckaufnahmefähiger Außenbehälter (1) mit einer austauschbaren und in dem Außenbehälter (1) aufnehmbaren Innenkartusche (3) ausgebildet ist, wobei die Innenkartusche (3) das Filtermaterial enthält und mit ihrer äußeren Form der inneren Form des Außenbehälters (1) angepaßt ist.

## Beschreibung

Die vorliegende Erfindung betrifft einen Wasserfilter für unter Druck stehendes Wasser mit einem druckfesten Wasserzulauf und einem entsprechenden Wasserabgang, sowie mit einem Aufnahmebehälter für Filtermaterial, welches so angeordnet ist, daß es von dem vom Wasserzulauf zum Wasserabgang hindurchtretenden Wasser zwangsweise durchströmt wird. Die entsprechenden bekannten Druckbehälter weisen zumeist auch noch eine angeflanschte oder aufgeschraubte oder auch einstückig mit dem Druckbehälter ausgebildete Armatur mit genormten Zugangs- und Abgangsverbindungen auf.

Das Volumen der das Filtermaterial aufnehmenden Druckbehälter beträgt je nach Anwendungsfall typischerweise zwischen etwa 3 Liter und etwa 12 Liter. Das Filtermaterial ist im allgemeinen eine Mischung aus Aktivkohle und einem lonenaustauscherharz, gegebenenfalls unter Zusatz von Silber bzw. Silberionen, die einer Keimentwicklung vorbeugen sollen. Die Aktivkohle hält unerwünschte organische Bestandteile und zum Beispiel auch Chlor sowie Chlorverbindungen des Rohwassers zurück, während das lonenaustauscherharz vor allem eine Enthärtung, das heißt eine Reduzierung der Ca- und Mg-lonen sowie der Hydrogenkarbonat-lonen und gegebenenfalls auch anderer Mineralien bewirkt.

Je nach der Menge des über den Wasserabgang entnommen Wassers ist die Filterkapazität eines solchen Filters früher oder später erschöpft, das heißt nach einem entsprechenden Zeitraum, der zwischen etwa 4 Wochen und mehreren Monaten beträgt, muß das Filtermaterial ausgetauscht werden. Auch wenn der weitaus größte Teil des Filtermaterials zumeist aus lonenaustauscherharz besteht, ist dieses zumeist zuerst erschöpft, das heißt nicht mehr in der Lage, weitere lonen aufzunehmen, so daß eine Wasserenthärtung und Entmineralisierung nicht mehr stattfinden kann, die zumindest in den meisten industrialisierten Ländern, in denen andere Wasserverunreinigungen eine geringere Rolle spielen, der Hauptzweck entsprechender Wasserfilter ist. Der Austausch des Filtermaterials erfolgt zumeist in der Weise, daß eine kompletter Druckbehälter, unter Umständen einschließlich der damit fest verbundenen Armaturen, ausgetauscht und zum Entsorgen oder Recyceln des Filtermaterials sowie zum erneuten Füllen an den Hersteller zurückgeben wird.

Da die betreffenden Druckbehälter relativ voluminös sind (wie bereits erwähnt zwischen 3 Liter und 12 Liter) und zur Vermeidung übergroßer Baulängen auch relativ große Querschnitte zwischen 100 und 300 cm² haben, sind sie erheblichen inneren Kräften ausgesetzt, wenn sie mit einer unter Druck stehenden Wasserleitung verbunden sind. Typischerweise liegen die in Wasserleitungen auftretenden Drücke im Bereich von 2 bis 6 bar, so daß auf jeden Quadratzentimeter der Innenwand eines solchen Druckbehälters eine Kraft zwischen ca. 20 und 60 N ausgeübt wird, so daß sich die auf die Innenfläche der Druckbehälter ausgeübte Gesamtkraft zu einem Äquivalent von mehreren Tonnen Gewicht summiert.

Die Behälter müssen also entsprechend druckfest und stabil hergestellt werden, sie bestehen daher zumeist aus Stahlzylindem. Die Druckbehälter sind auch dementsprechend schwer und auf Grund ihres Gewichtes umständlich zu transportieren und zu handhaben. Sie müssen außerdem, zumindest so weit es um Anwendungen für Trinkwasser geht, auch lebensmittelechte innere Oberflächen aufweisen und sind dementsprechend auch von ihrer Innenseite her lackiert oder beschichtet. Der Rücktransport, die Leerung, Reinigung und Wiederbefüllung sind relativ aufwendige und kostspielige Vorgänge. Aufgrund des relativ großen Gewichtes der stabil ausgeführten Druckbehälter sind entsprechende Transportkapazitäten erforderlich, und schließlich ist auch die Zahl Druckbehälter zur Aufrechterhaltung des Filterkreislaufes relativ groß, da davon auszugehen ist, daß für jeden Einsatzort eines einzigen Filterbehälters mindestens zwei zusätzliche Filterbehälter bereitgehalten werden müssen, die sich gerade auf dem Rücktransport, bei der Wiederbefüllung, bei der Anlieferung oder aber in einem Lager des Herstellers oder auch des Verbrauchers befinden, wenn dieser beispielsweise mehrere derartige Behälter bevorratet, um nach dem Verbrauch auch jeweils mehrere entsprechende Filterbehälter auszutauschen.

Dies verursacht erhebliche logistische Kosten für Herstellung, Bevorratung und den Transport der genannten Druckbehälter.

Gegenüber diesem Stand der Technik liegt der vorliegenden Erfindung die Aufgabe zu Grunde, einen Wasserfilter bzw. einen Behälter für einen Wasserfilter zu schaffen, bei welchem die Logistikkosten für Herstellung, Bevorratung und Austausch von Behältern mit verbrauchtem Filtermaterial beträchtlich vermindert werden.

Diese Aufgabe wird dadurch gelöst, daß der Druckbehälter einerseits aus einem druckaufnahmefähigen Außenbehälter und andererseits aus einer in dem Außenbehälter aufgenommenen, wasserdichten aber für sich nicht unbedingt druckfesten Innenkartusche besteht, welche das Filtermaterial aufnimmt. Dabei ist die äußere Form der Innenkartusche dem Innenraum des druckaufnahmefähigen Außenbehälters im wesentlichen angepaßt, so daß der Innenbehälter bzw. die Innenkartusche großflächig oder zumindest an sehr vielen dicht nebeneinander liegenden Punkten an der Innenfläche des Außenbehälters anliegt bzw. durch diese abgestützt wird.
Für die Beschreibung und Darstellung der vorliegenden Erfindung und bevorzugter Ausführungsformen derselben wird Bezug genommen auf drei weitere, gleichzeitig eingereichte Patentanmeldungen derselben Anmelderin, die auf ihrem jeweiligen Deckblatt mit den internen Zeichen NE-71, NE-72 und NE-73 bezeichnet sind. Der Inhalt dieser Anmeldungen soll die vorliegende Anmeldung ergänzen, soweit einzelne Merkmale hier nicht ausdrücklich beschrieben sind.

Dabei kann diese Innenkartusche aus einem relativ einfachen und dünnwandigen oder auch mehr oder weniger leicht verformbaren Kunststoff hergestellt sein, z. B. im Spritzgußverfahren. Der Außenbehälter kann entweder aus Metall oder aber aus einem hinreichend festen Kunststoffmaterial, welches gegebenenfalls auch faserverstärkt sein kann, hergestellt werden. Er ist, wenn er aus Kunststoff besteht, entsprechend dickwandiger ausgebildet als der Innenbehälter, und auch das Kunststoffmaterial muß selbstverständlich im Hinblick auf die geforderte Druckfestigkeit ausgewählt werden.

Zweckmäßigerweise hat der Innenbehälter eine im wesentlichen konvexe äußere Form, die insoweit auch der inneren Form des Außenbehälters entspricht, wobei eine solche konvexe Form für die Aufnahme von Innendruck relativ gut geeignet ist.

Besonders bevorzugt ist eine Ausführungsform der Erfindung, bei welcher der Innenbehälter aus einem im wesentlichen zylindrischen Hauptteil mit einem abgerundeten, sich nach außen vorwölbenden Boden besteht, wobei der zylindrische Hauptteil sich zum Boden leicht konisch verjüngend ausgebildet sein kann, was das Herausziehen einer solchen Innenkartusche aus einem in seiner Form der Innenkartusche angepaßten Außenbehälter erleichtert. Vorzugsweise sind Innenkartusche und Außenbehälter so aufeinander abgestimmt, daß die Innenkartusche einen satten Paßsitz in dem Außenbehälter hat.

Alternativ kann aber in einer anderen, ebenfalls bevorzugten Ausführungsform der Erfindung der Boden im wesentlichen eben oder leicht konkav ausgebildet sein. Dies gilt insbesondere für eine Ausführungsform, bei welcher der Boden aus einem getrennt in den Außenbehälter eingesetzten Bodeneinsatz besteht. In diesem Fall kann z.B. der Boden des Außenbehälters eine Öffnung aufweisen, die sich fast über den gesamten Querschnitt des Bodens erstreckt, wobei in dieser Öffnung ein zylindrisches Fußteil des Bodeneinsatzes axial verschiebbar aufgenommen ist. Der darüber liegende Teil des Bodeneinsatzes hat die Form einer stufenförmigen Erweiterung des zylindrischen Fußteils und ist im Inneren des Außenbehälters, das heißt in dessen unteren Bereich, im wesentlichen passend aufgenommen.

Bei dieser Ausführungsform kann die Innenkartusche sehr einfach aus dem Außenbehälter herausgedrückt werden, indem der Bodeneinsatz gegenüber dem Außenbehälter axial nach innen verschoben wird. Konkret setzt man zu diesem Zweck den Bodeneinsatz mit seinem zylindrischen Fußteil auf den Boden auf und erfaßt den Außenbehälter an seinem oberen äußeren Rand, um ihn gegen den Boden herabzudrücken. Die untere zylindrische Öffnung des Bodeneinsatzes bzw. deren Rand gleitet dann auf dem äußeren zylindrischen Umfang des Fußteils des Bodeneinsatzes hinweg, wodurch der Innenbehälter nach oben aus dem Außenbehälter herausgedrückt wird.

Um bei der zuvor erwähnten Ausführungsform die Innenkartusche leicht aus dem Außenbehälter herausnehmen zu können, ist eine Ausgestaltung der Erfindung bevorzugt, bei welcher der Außenbehälter vorzugsweise im Zentrum seines Bodenbereiches eine Öffnung aufweist, durch die der Boden des Innenbehälters zugänglich wird bzw. frei liegt, so daß durch einen durch diese Öffnung auf den Boden des Innenbehälters ausgeübten Druck der Innenbehälter leicht nach oben aus dem Außenbehälter herausgedrückt werden kann. Zweckmäßigerweise kann hierzu am Boden des Innenbehälters noch ein mit der Öffnung im Außenbehälter ausgerichteter Zapfen vorgesehen sein, der in diese Öffnung hineinragt und auf den relativ leicht ein Druck ausgeübt werden kann, um den Innenbehälter aus dem Außenbehälter herauszudrücken. Wenn der Innenbehälter aus einem relativ weichen, nachgiebigen Kunststoffmaterial hergestellt ist, so kann es zweckmäßig sein, wenn der Boden des Innenbehälters insgesamt oder zumindest im Bereich des Zapfens und um den Zapfen herum verstärkt ausgebildet ist, damit die von unten her auf den Zapfen ausgeübten Kräfte auch im wesentlichen ohne Verformung auf den gesamten Innenbehälter übertragen werden, so daß dieser tatsächlich aus dem Außenbehälter herausgedrückt wird. Auch die Geometrie des Bodens von Innen- und Außenbehälter, z. B. in Form einer kuppelartigen Wölbung, kann bereits eine hinreichende Versteifung des Bodenbereiches bewirken, so daß eine zusätzliche Verstärkung im Zapfenbereich nicht erforderlich ist.

Andererseits hat eine relativ leichte und noch hinreichend verformbare Innenkartusche den Vorteil, daß sich ihre Wand relativ gut an die Innenwand des Außenbehälters anschmiegt, so daß die im inneren der Kartusche auftretenden Druckkräfte unmittelbar durch die Wand der Innenkartusche auf die Innenwand des Außenbehälters übertragen werden.

Die erfindungsgemäße Ausbildung des Wasserfilters als druckfester Außenbehälter mit einem relativ einfachen, für sich allein nicht ausreichend druckfesten Innenbehälter ermöglicht es, daß der vergleichsweise schwere, voluminöse Außenbehälter regelmäßig an Ort und Stelle verbleibt und lediglich die Innenkartusche ausgetauscht werden muß. Die Innenkartusche kann daher aus einem relativ einfachen und preiswerten, dünnwandigen Kunststoff hergestellt werden, hat ein entsprechend geringes Gewicht, ist leicht transportierbar und bindet auch bei großen im Umlauf befindlichen Stückzahlen erheblich weniger Kapital als die zuvor verwendeten, massiven und druckfesten Filterbehälter. Die Innenbehälter bzw. Innenkartuschen können entweder Wegwerfartikel sein (nach Entleerung und Recycling des Filtermaterials), sie können aber auch so ausgestaltet sein, daß sie wiederverwendbar sind oder daß sie zumindest recycelfähig sind, das heißt das betreffende Kunststoffmaterial kann erneut als Ausgangsprodukt für die Herstellung neuer Innenkartuschen verwendet werden.

Zweckmäßigerweise weist die Innenkartusche neben einem im wesentlichen zylindrischen Hauptteil mit Boden noch einen getrennt aufsetzbaren und mit dem Hauptteil verbindbaren Dekkel auf, wobei die Verbindung am besten im Bereich von Flanschen erfolgt, die am oberen Rand des zylindrischen Hauptteiles und an einem entsprechenden, äußeren Deckelabschnitt vorgesehen sind.

Dabei ist der Deckel vorzugsweise nicht exakt eben, sondern weist, unter anderem zum Zwecke der Versteifung, eine ringförmige Einsenkung mit einer zylindrischen Außenwand auf, an deren oberen Ende sich ein Flansch anschließt, während der Außendurchmesser der zylindrischen Außenwand auf den Innendurchmesser des oberen Endes der Kartusche abgestimmt ist und passend in diese eingesetzt werden kann, bis die beiden Flansche aufeinander zu liegen kommen. Im Zentrum des Deckels sind vorzugsweise Verbindungselemente für die Verbindung mit einer Armatur angeordnet, wobei diese Verbindungselemente die Strömungswege für zufließendes und abfließendes Wasser definieren. Auch der Außenbehälter ist vorzugsweise an seinem oberen Ende mit einem nach außen ragenden Flansch versehen, auf welchem der Flansch des Innenbehälters aufliegt, und ein Deckel des Außenbehälters weist ebenfalls einen Flanschrand auf und liegt auf den beiden Flanschen von Innenbehälter und Innendeckel auf, so daß die Flansche von Innendeckel und Innenbehälter zwischen den Flanschen von Außenbehälter und Außendeckel zusammengepreßt werden können.

Zweckmäßigerweise weist der Flansch des Außendeckels oder aber der des Außenbehälters noch einen äußeren zylindrisch umlaufenden Bund auf, der die Flansche von Innenbehälter und Innendeckel radial nach außen abdeckt. Ansonsten weist der Außendeckel eine zentrale Öffnung für die Aufnahme von Verbindungselementen zwischen dem Innenbehälter und einer entsprechenden Armatur auf, wobei insbesondere der Öffnungsrand oder auch andere Bereiche des äußeren Deckels mit Halterungs- und Befestigungselementen ausgestattet sind, um eine solche Armatur mechanisch fest an dem Außenbehälter und dem darin aufgenommenen Innenbehälter mit Deckel festzuhalten. Ansonsten ist die innere Kontur des äußeren Deckels der Kontur des inneren Deckels angepaßt, um diesen gegen den von innen wirkenden Druck abzustützen, wobei es sich versteht, daß der Deckel des Außenbehälters aus einem entsprechend mechanisch stabilen Material hergestellt ist.

Die Flansche von Außenbehälter und Außendeckel könnten durch einen Spannring zusammengehalten und auch in axialer Richtung aufeinandergepreßt werden, so daß auch die Flansche von Innenbehälter und Innendeckel entsprechend fest zusammengedrückt werden. Im übrigen können die Flansche von Innenbehälter und Innendeckel auch miteinander verschweißt sein.

Vorzugsweise wirkt der Außendeckel jedoch als Überwurfmutter und ist demzufolge an seinem unteren Rand mit einem Innengewinde versehen, das auf eine entsprechendes Außengewinde am oberen Rand des Außendeckels aufgeschraubt wird, wobei die Flansche von Innenbehälter und Innendeckel teils durch den Rand des Außenbehälters und teils durch einen entsprechenden Vorsprung bzw. Bund auf der Innenseite des Außendeckels zusammengedrückt werden.

Alternativ zu den Flanschen oder einer Gewindeverbindung ist in einer anderen Ausführungsform der Erfindung vorgesehen, daß Verschlußelemente im oberen Bereich an der Außenseite des Außenbehälters angeordnet sind und daß entsprechende Verschlußelemente am oberen äußeren Rand des Deckels vorgesehen sind, wobei diese Verschlußelemente insgesamt als Bajonettverschluß ausgebildet sind. Solche Verschlußelemente müssen nicht notwendigerweise um den ganzen Umfang des Behälters herumreichen, sondern es reicht aus, wenn sie paarweise auf gegenüberliegenden Seiten oder an drei bis sechs Stellen um den Umfang verteilt angeordnet sind.

Weitere Vorteile, Merkmale und Anwendungsmöglichkeiten der vorliegenden Erfindung werden deutlich an Hand der folgenden Beschreibung einer bevorzugten Ausführungsform und der dazugehörigen Figuren. Es zeigen:
- Figur 1: eine perspektivische Explosionsdarstellung eines erfindungsgemäßen Wasserfilters,
- Figur 2: eine perspektivische Ansicht des Außenbehälters im Schnitt und ohne zugehörigen Dekkel,
- Figur 3: eine perspektivische Ansicht des Innenbehälters, einmal durchsichtig gezeichnet zur Darstellung des inneren Aufbaus und einmal mit aufgesetztem Deckel,
- Figur 4: einen axialen Schnitt durch einen erfindungsgemäßen Wasserfilter in einem vollständig zusammenmontierten Zustand
- Figur 5: Einzelheiten der Flanschverbindung zwischen Innen- und Außenbehälter und ihren entsprechenden Deckeln,
- Figur 6: einen vergrößerten, die Achse des Filters enthaltenden Schnitt im Deckelbereich,
- Figur 7: eine alternative Ausführungsform eines Außenbehälters mit eingesetztem Innenbehälter und
- Figur 8: eine weitere alternative Ausführungsform eines Außenbehälters mit eingesetztem Innenbehälter und aufgesetztem Deckel.

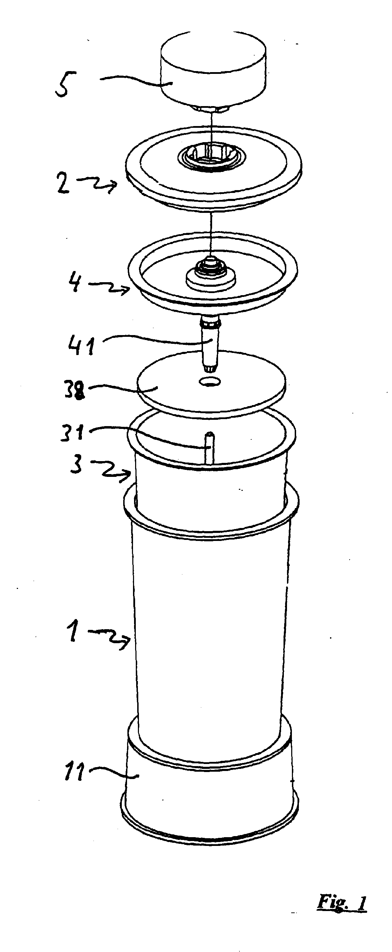

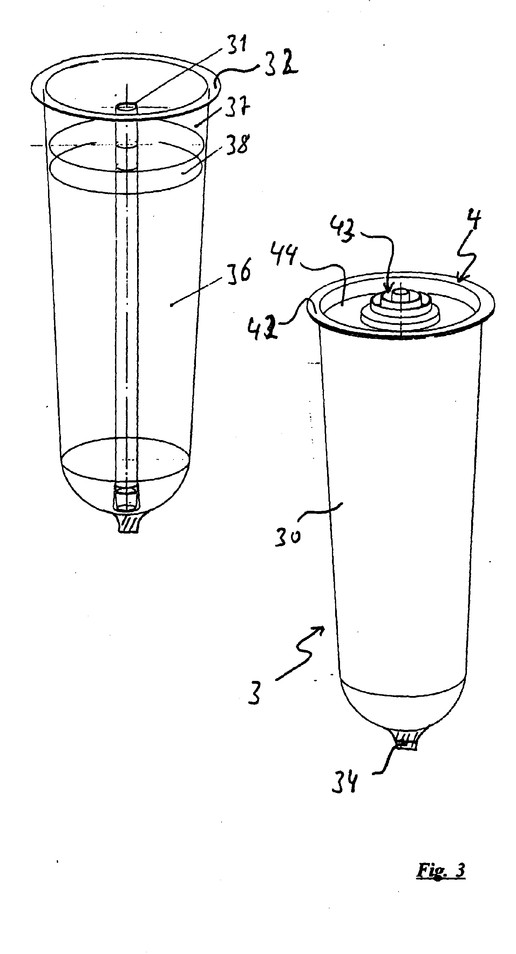

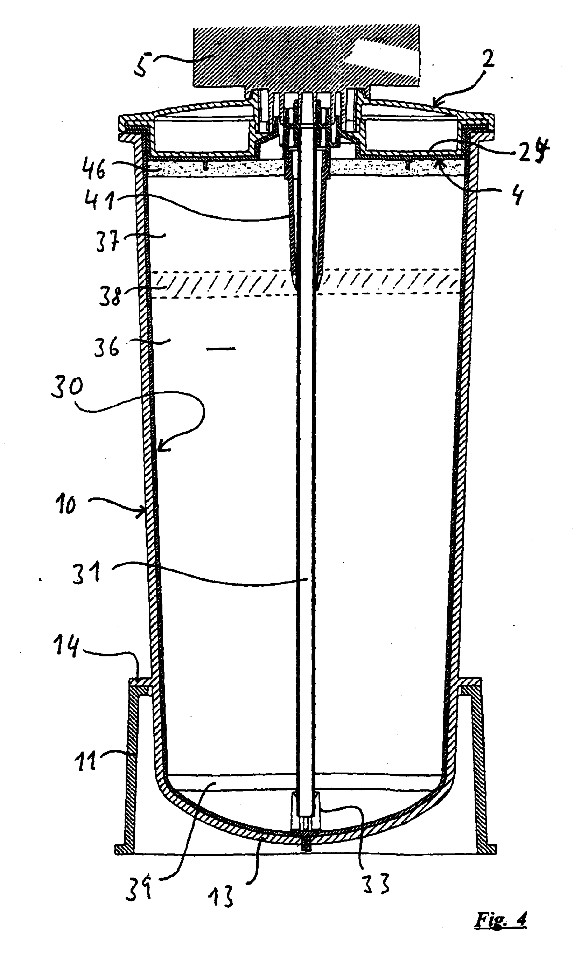

In Figur 1 erkennt man in perspektivischer Explosionsdarstellung einen Außenbehälter 1, einen teilweise darin eingesetzten und teilweise herausgezogenen Innenbehälter 3, den zum Innenbehälter 3 gehörenden Deckel 4, sowie den Außendeckel 2 zum Außenbehälter 1. Außerdem ist noch ein Filtertrennelement 38 erkennbar, welches im eingesetzten Zustand ein zentrales Steigrohr 31 im Innenbehälter 3 umfaßt und dessen Position auch in den Figuren 3 und 4 erkennbar ist.

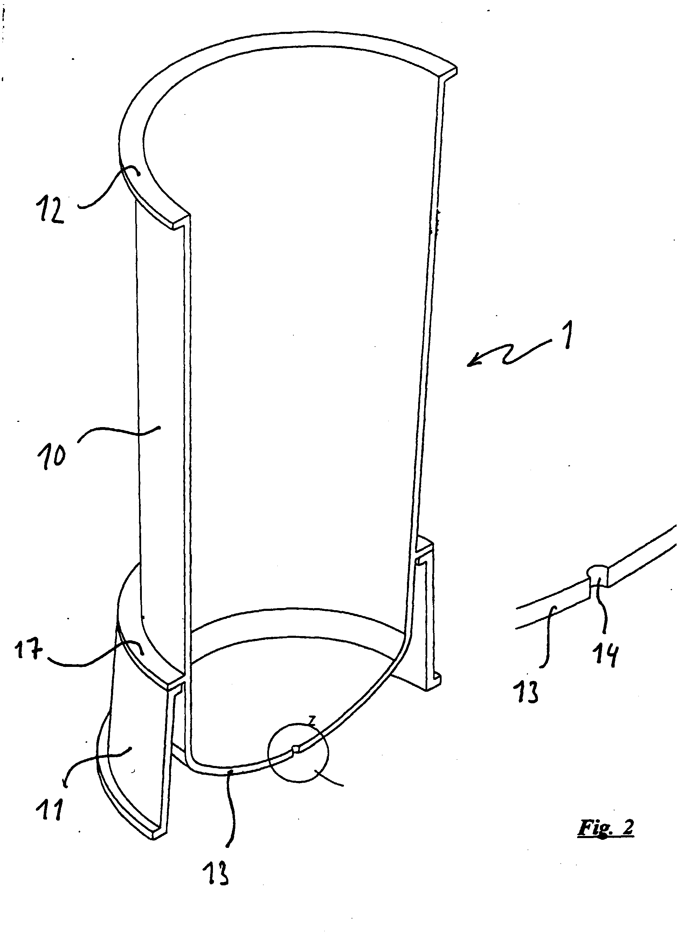

Weiterhin erkennt man in Figur 1 noch ein lediglich schematisch dargestelltes Anschluß- bzw. Armaturelement 5, an welchem Zugangs- und Abgangsanschlüsse angeordnet sind und welches außerdem noch Meßeinrichtungen zur Messung der durch den Filter hindurchströmenden Wassermenge aufweist. In Figur 2 erkennt man den in der Mitte aufgeschnitten Außenbehälter 1 nochmals in einer perspektivischen Schnittansicht. Der Hauptteil 10 des Behälters 1 ist ein im wesentlichen zylindrischer, sich nach unten hin geringfügig konisch verjüngender Hohlkörper, an dessen Unterseite ein gewölbter Boden 13 anschließt, der wiederum in der Bodenmitte eine Öffnung bzw. Bohrung 14 aufweist, wie in dem vergrößerten, mit einem Kreis angedeuteten Ausschnitt Z in Figur 2 zu erkennen ist. Etwa bei einem Viertel der axialen Gesamtlänge des Außenbehälters 1, vom Boden aus gemessen, ist an die Außenwand des zylindrischen Hauptteiles 10 ein umlaufender Flansch 17 angeformt, der wiederum auf einem den unteren Abschnitt des Hauptteiles 10 umgebenden Standfuß 11 aufsitzt. Der Fuß 11 erstreckt sich in axialer Richtung etwas über die Ebene der unteren Behälterwand 13 hinaus, so daß der Behälter freistehend aufstellbar ist, wobei er über den Flansch 17 und den Fuß 11 in seiner vertikalen Position gehalten wird. Der obere Rand des Behälters 1 bzw. des Zylinderteiles 10 ist als nach außen umgewendeter und eine radiale Ebene definierender Flansch 12 ausgebildet.

In Figur 3 erkennt man zweimal den zugehörigen Innenbehälter, allerdings in einem etwas verkleinerten Maßstab, da jedenfalls die Außenmaße des in Figur 3 erkennbaren, Behälters 3 ziemlich exakt mit den Innenmaßen des Behälters 1 bzw. des Hauptteils 10 des Behälters 1 übereinstimmen. Im linken oberen Teil der Figur 3 ist der Innenbehälter durchsichtig dargestellt, so daß man das darin aufgenommene Steigrohr 31 deutlich erkennt. Auch die bereits erwähnte Trennschicht 38 ist in diesem Teilbild der Figur 3 nochmals dargestellt. Im rechten Teil der Figur 3 erkennt man den Behälter 3 mit einem aufgesetzten Deckel 4. Auch hier hat der im wesentlichen zylindrische Hauptteil 30 eine leicht konische Verjüngung nach unten hin, wo der Innenbehälter bzw. die Filterkartusche 3 einen abgerundeten Boden hat, der mehr oder weniger kuppelförmig ist und der der Form des Bodens 13 des Außenbehälters 1 angepaßt ist. Außerdem erkennt man am unteren Ende des Innenbehälters 3 noch einen Zapfen 34, dessen Querschnitt so bemessen ist, daß er ohne weiteres in das zentrale Loch 14 am Boden 13 des Außenbehälters 1 hineinpaßt und möglicherweise auch geringfügig an der Unterseite der Bohrung 14 aus dem Boden 13 heraussteht. Man erkennt in Figur 3 außerdem, daß der Deckel 4 einen Flanschrand 42, zentrale, konzentrische Verbindungselemente 43 und dazwischen eine ringförmige Einsenkung 44 aufweist.

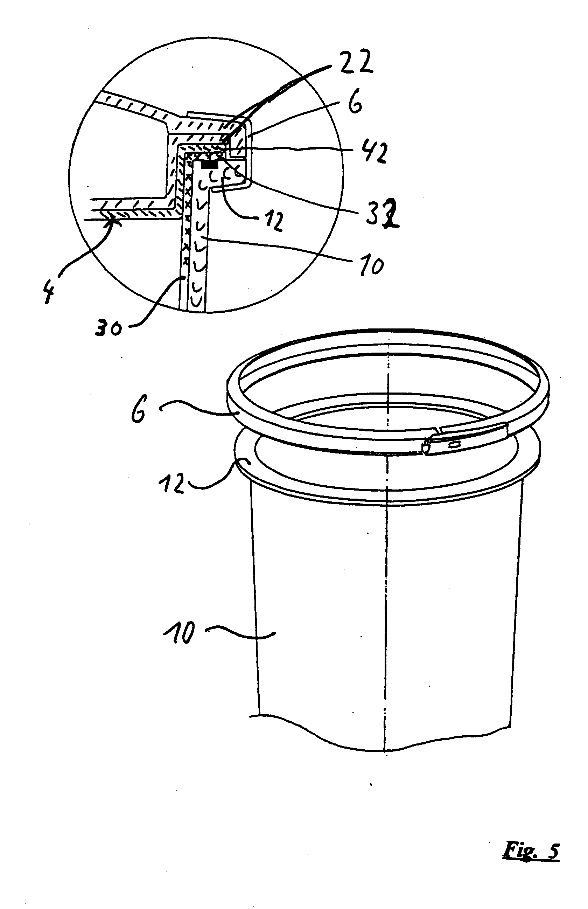

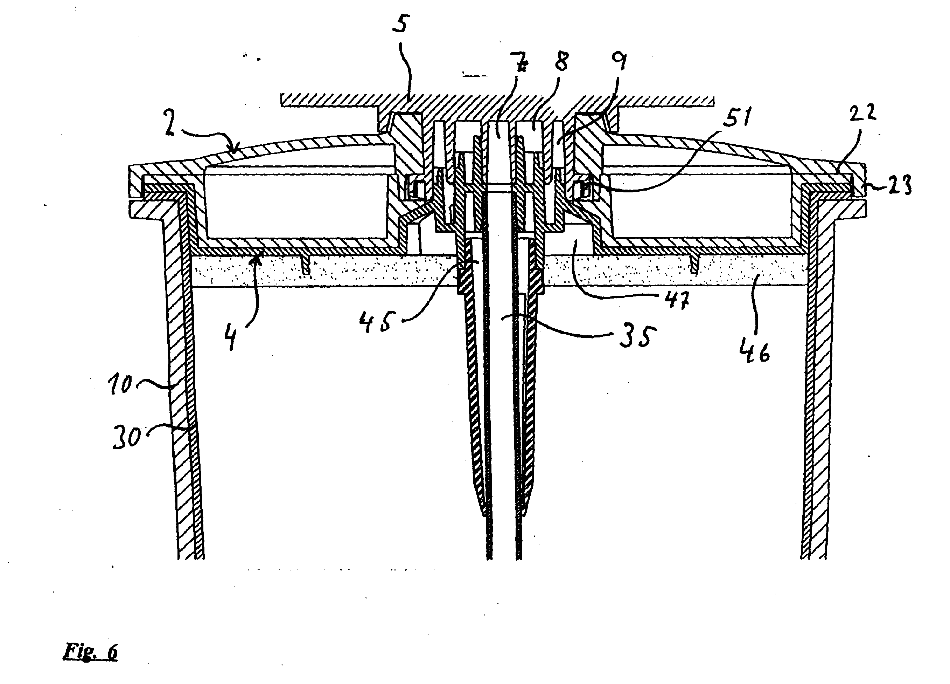

In Figur 4 ist der gesamte Wasserfilter im zusammenmontierten Zustand nochmals im Schnitt dargestellt. Wie man auch hier deutlich erkennt, haben der Außenbehälter 1 und der Innenbehälter 3 eine im wesentlichen zylindrische, sich nach unten leicht konisch verjüngende zylindrische Wand 10 bzw. 30 und die Form des Innenbehälters 30 ist der inneren Form des Außenbehälters 1 so exakt angepaßt, daß der Innenbehälter 3 im wesentlichen vollflächig an der Innenwand des Behälters 1 anliegt. Dabei ist es im übrigen möglich, die Behälterwand 30 mehr oder weniger verformbar zu gestalten, so daß etwaige Unebenheiten oder Toleranzabweichungen ausgeglichen werden und die Wand des Innenbehälters 3 sich weitgehend oder vollständig an die Innenwand des Außenbehälters 1 anschmiegt. Der Innenbehälter ist durch einen Deckel 4 verschlossen und der Außenbehälter 1 ist durch einen Deckel 2 verschlossen, wobei die genaue Ausgestaltung der Deckel und ihrer Verbindung mit den jeweiligen Behältern noch genauer im Zusammenhang mit den Figuren 5 und 6 beschrieben wird. Wie man erkennt, erstreckt sich das zentrale Steigrohr 31 im wesentlichen zentral über die gesamte Länge des Innenbehälters 3, dessen Innenraum ansonsten im wesentlichen in 4 Zonen geteilt ist. Am unteren Ende erkennt man, daß das Steigrohr 31 von einer Diffusor- oder Siebhülse 33 umgeben ist. Darüber erkennt man eine Verteiler- und Rückhaltescheibe 39, die einen unteren Sammelraum von einem Raum 36 für Filtermaterial begrenzt, wobei aber der Raum unterhalb der Verteilerscheibe 39 auch mit Filtermaterial ausgefüllt und somit die Verteilerscheibe 39 auch fortgelassen werden könnte Dieser Raum 36 nimmt den größten Teil des Volumens des Innenbehälters 3 ein. Darüber erkennt man die bereits erwähnte Trennschicht 38 und einen weiteren Raum 37 für zusätzliches Filtermaterial. Der genaue Aufbau dieser Filterschichtung wird in einer anderen, parallel eingereichten Patentanmeldung der selben Anmelderin beschrieben.

In Figur 5 erkennt man, wie bereits erwähnt, die Einzelheiten der Flanschverbindungen zwischen den Behältern 1, 3 und den Deckeln 2, 4. Man erkennt im unteren rechten Teil der Figur 5 zunächst einmal das obere Ende des Außenbehälters 1 mit seiner zylindrischen Wand 10 und dem Flanschrand 12 am oberen Ende der im wesentlichen zylindrischen Wand 10. Darüber ist ein Spannring 6 eingezeichnet, der über einen Exzenterhebel gespannt werden kann.

Der obere Teil der Figur 5 zeigt die Verbindung der Flansche von Behältern und Deckeln im Schnitt zusammen mit dem diese umgreifenden Spannring 6. Man erkennt, daß der Außenbehälter am oberen Ende seiner Wand 10 in einen im wesentlichen horizontal und radial nach außen abstehenden Flansch 12 übergeht. Wenn der Innenbehälter bzw. die Innenkartusche 3 eingesetzt ist, so liegt die Außenwand 30 des Innenbehälters 3 auf der Innenseite der Wand 10 des Außenbehälters 1 an und wird so weit in den Behälter hineinverschoben, bis der Flansch 32 am oberen Ende der Wand 30 des Innenbehälters auf dem Flansch 12 am oberen Ende der Wand 10 des Außenbehälters aufsitzt. Der Innenbehälter 3 sollte so bemessen sein, daß in diesem Zustand auch der Boden des Innenbehälters auf dem Boden 13 des Außenbehälters aufsitzt. Dies ist im übrigen in Figur 4 deutlich zu erkennen. In das obere offene Ende des Innenbehälters 3 wird anschließend der Deckel 4 eingesetzt, der, wie bereits erwähnt, eine ringförmige Einsenkung 44 und eine äußere, zylindrische Wand aufweist, deren Außendurchmesser auf den Innendurchmesser am oberen Ende des zylindrischen Abschnittes 30 des Innenbehälters abgestimmt ist. Der Deckel 4 wird so weit in diese Öffnung eingeschoben, bis sein Flansch 42 auf dem Flansch 32 des Innenbehälters 3 aufliegt. Diese Verbindung zwischen Innenbehälter 3 und innerem Deckel 4 kann übrigens auch schon erfolgen, bevor der Innenbehälter 3 in das innere des Außenbehälters 1 eingeschoben wird. Insbesondere können die beiden Flansche 32, 42 oder auch die aneinander anliegenden zylindrischen Abschnitte des Deckels 4 und der zylindrischen Wand 30 miteinander verschweißt sein, so daß sie insgesamt als Einheit bewegt werden, zusammen mit der darin enthaltenen Füllung aus Filtermaterial. Schließlich ist auf den Deckel 4 des Innenbehälters noch der Deckel 2 des Außenbehälters aufgesetzt. Dieser Deckel 2 des Außenbehälters ist in Figur 6 noch deutlicher zu erkennen und wird im Zusammenhang mit Figur 6 noch genauer beschrieben. Insgesamt umgreifen jedenfalls die beiden Flansche 12 des Außenbehälters 1 und 22 des Deckels 2 die Flansche 32, 42 von Innenbehälter und Innendeckel und der gesamte Aufbau wird mechanisch fest zusammengehalten bzw. zusammengepreßt durch den Spannring 6.

In Figur 6 erkennt man nochmals einen vergrößerten Ausschnitt des Deckelbereichs des erfindungsgemäßen Wasserfilters in einem die Achse enthaltenden Schnitt. Neben den bereits beschriebenen Elementen der Flanschverbindung erkennt man, daß der Außendeckel 2 effektiv aus 2 Teilen besteht, nämlich einem oberen und einem unteren Teil, die vor allem aus Gründen der Stabilität des Deckels aber auch wegen einer einfacheren Herstellbarkeit zunächst getrennt hergestellt und später zusammengefügt werden. Dabei umfaßt der innere Deckel im wesentlichen nur die zylindrische Einsenkung 24 mit einer zentralen Öffnung und am äußeren Ende einem Flanschteil. Der obere Deckelteil des Deckels 2 weist ebenfalls eine zentrale Öffnung auf und erstreckt sich radial nach außen zu einem weiteren Flanschteil, wobei diese beiden Flanschteile zu einem gemeinsamen Flansch 22 verbunden sind, der auf seiner Außenseite noch einen zylindrisch umlaufenden Bund 23 hat. In der Mitte sind die beiden Deckelteile ebenso miteinander verbunden wie im äußeren Flanschbereich, wobei im Bereich der zentralen Öffnung der Verbindung des unteren und oberen Deckelteils noch Aussparungen als Teil eines Bajonettverschlusses 51 vorgesehen sind. Der zylindrische Bund 23, der außen an den Flansch 22 des oberen Deckels 2 anschließt, ist so bemessen, daß er die Flansche 32, 42 auf ihrer Außenseite umfaßt, so daß der Innenbehälter 3 mit seinem Deckel 4 vollständig und von außen praktisch nicht sichtbar in dem Außenbehälter 1 mit seinem Deckel 2 aufgenommen ist.

Weiterhin erkennt man in Figur 6 noch einige Einzelheiten zu den Strömungsdurchgängen und der Verbindung zwischen einer oberen Anschlußarmatur 5 mit dem Filterraum. Der obere Filterraum 37, der im Zusammenhang mit Figur 4 beschrieben wurde, wird an seinem oberen Ende durch eine Rückhaltevlies oder Gewebe 46 abgeschlossen, das den Austritt irgendwelcher Filterpartikelchen verhindern soll und gleichzeitig eine Verteiler- bzw. Sammlerfunktion für die gefilterte Flüssigkeit hat.

Die Wasserzufuhr erfolgt von der Armatur 5 aus zentral durch die obere Bohrung 7 und die unten anschließende Bohrung 35, die durch das Steigrohr 31 definiert wird. Eine parallele Zuführung von sogenanntem Rohwasser erfolgt auch durch die die zentrale Bohrung 7 umgebende, ringförmige Zufuhröffnung 8, die (außerhalb der in Figur 6 dargestellten Schnittebene) mit dem Ringraum 45 einer Hülse 41 verbunden ist, die sich von dem Deckel 4 aus nach unten erstreckt. Diese Hülse 41 liegt mindestens mit ihrem unterem Abschnitt eng an dem Steigrohr 31 an, hat jedoch an diesem unterem Ende auch einige kleinere Öffnungen oder Schlitze, die eine Verbindung zu der Zwischenschicht 38 (siehe Figur 4) herstellen. Der Anteil des Rohwassers, der neben der Zuführung durch die zentrale Zufuhr 7 parallel durch die Zufuhr 8 zugeführt wird, ist durch ein hier nicht dargestelltes beschriebenes Ventil einstellbar. Mit Bezug auf Figur 4 erkennt man, daß der zentrale Teil des zugeführten Rohwassers durch das Steigrohr 1 bis zum Boden des Behälters geführt, durch den Diffusor 33 ausströmt und sich in dem unteren Volumen unterhalb der Trennscheibe 39 verteilt und von dort aus gleichmäßig durch die Trennscheibe und die darüber angeordnete Filterschicht 36 nach oben steigt, weiterhin durch die Trennschicht 38 hindurchströmt und schließlich auch noch die obere Filterschicht 37 und das Rückhaltevlies bzw. Rückhaltegewebe 46 durchströmt, bevor es in einen ringförmigen Sammelraum 47 eintritt, der (wiederum außerhalb der dargestellten Schnittebene) Verbindungen zu dem äußem ringförmigen Wasserabgang 9 hat. Die Armatur 5 selbst weist lediglich einen Zugangsanschluß und einen Abgangsanschluß auf, die hier nicht dargestellt sind. Dies bedeutet, daß ein Teil, im allgemeinen der größte Teil, des zugeführten Rohwassers sowohl durch die Filterschicht 36 als auch durch die Filterschicht 37 hindurchgeführt wird, während ein anderer, kleinerer Teil, der vorzugsweise einstellbar ist, nur die obere Filterschicht 37 durchströmt, wobei sich beide getrennt zugeführten Wasserströme in dem Bereich 38 des Filters mischen.

Zum Austausch der inneren Filterkartusche wird lediglich (nach Schließen eines Zuflußventils) die obere Armatur 5 durch leichte Drehung und axiales Herausnehmen nach Art eines Bajonettverschlusses von dem äußeren Deckel 2 und dem inneren Deckel 4 getrennt. Anschließend wird der Spannring 6 gelöst und der Deckel 2 kann abgenommen werden. Das System kann im übrigen auch so ausgestaltet werden, daß die Armatur 5 nicht erst von dem Deckel 2 getrennt werden muß, sondern daß lediglich der Spannring 6 gelöst bzw. der Außendeckel losgeschraubt werden muß, um den Außendeckel 2 zusammen mit der darauf montierten Armatur 5 von dem Innendeckel 4 abzuziehen. Der Innendeckel 4 und die Armatur 5 weisen eine Reihe aufeinander abgestimmter konzentrischer Hülsen mit entsprechenden Durchgängen auf, die beim Zusammenfügen von Armatur 5 und Innendeckel 4, das heißt konkret beim Aufsetzen des Deckels 2 mit der Armatur 5 miteinander in dichtenden Eingriff gebracht werden.

Sobald der Deckel 2 mit der Armatur 5 abgenommen ist, kann die innere Filterkartusche mitsamt dem zugehörigen Deckel 2 als ganzes aus dem Außenbehälter 1 herausgenommen werden. Nach längerem Gebrauch und einem entsprechend festen Sitz des Innenbehälters 3 in dem Außenbehälter 1 muß die Trennung dieser beiden Behälter möglicherweise noch etwas unterstützt werden durch Ausüben eines axialen Drucks auf den Zapfen 34 nach oben, der unten aus dem Boden 13 des Außenbehälters hervorsteht. Hierzu faßt man entweder mit einem Hebel unter den Boden 13 oder der gesamte Behälter wird umgekippt oder auf den Kopf gestellt und man gibt einen oder mehrere Hammerschläge auf den Zapfen 34, um die beiden Behälter voneinander zu trennen. Die Kartusche kann dann in diesem Zustand zwecks Recycling zum Hersteller zurücktransportiert und durch eine neue Kartusche ersetzt werden. Dabei ist die Kartusche nur geringfügig schwerer als der gesamte Filterinhalt und ist vor allem wesentlich einfacher und preiswerter herzustellen als ein entsprechend großer Druckbehälter. Außerdem kommen der Außenbehälter 1 und seine zugehörigen Teile an keiner Stelle mehr mit dem Produkt, das heißt dem Rohwasser oder dem gefilterten Wasser, in Berührung, da der Innenbehälter nach außen hermetisch abgedichtet ist und nur über die zentralen Verbindungselemente des Deckels 4 mit der Armatur 5 verbunden ist, ohne daß dabei irgendwelche Teile des Außenbehälters 1 und des Deckels 2 mit dem Wasser in Berührung kommen. Aus diesem Grund braucht der Druckbehälter auch die ansonsten vorgeschriebenen Bedingungen für Lebensmittelechtheit und Beständigkeit nicht zu erfüllen, und es gibt insoweit keine Materialeinschränkungen für den Druckbehälter. Der Druckbehälter kann aus Metall hergestellt werden, besteht vorzugsweise jedoch aus spritzgegossenem Kunststoff entsprechender Festigkeit, wobei dieser Kunststoff z. B. auch ein faserverstärkter Kunststoff sein kann.

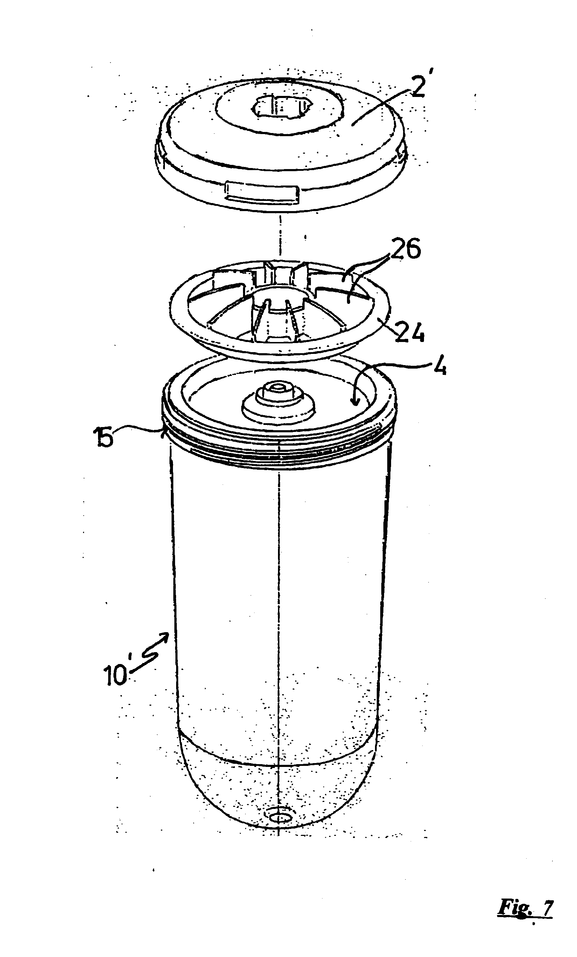

In Figur 7 erkennt man eine Alternative zu dem in den Figuren 1 und 2 dargestellten Außenbehälter 10. Der Außenbehälter 10' gemäß Figur 7 unterscheidet sich von dem Außenbehälter 10 in Figur 1 und 2 im wesentlichen dadurch, daß er unterhalb eines oberen Randes, der nach wie vor als Auflageflansch ausgebildet sein kann, ein Schraubgewinde 15 aufweist, und daß der zugehörige Deckel 2' ein entsprechendes Innengewinde aufweist, so daß Deckel 2' und Behälter 10' im Gegensatz zu der Ausführungsform nach den Figuren 1 und 2 nicht durch einen Spannring oder Spannklammern zusammengehalten werden, sondern durch den Gewindeeingriff zwischen Deckel 2' und Behälter 10'. Dabei werden dennoch in gleicher Weise wie in Verbindung mit den Figuren 1, 4 und 5 beschrieben, der Flansch 32 des Innenbehälters 3 und der Flansch 42 des zugehörigen Deckels 4 in der gleichen Weise miteinander verbunden bzw. aufeinander gepreßt, wie dies im Falle der Flanschverbindung zwischen Außendeckel 2 und Außenbehälter 10 der Fall war, wobei allerdings im vorliegenden Fall die Anpreßkraft durch das Aufschrauben des Deckels 2' auf das Außengewinde 15 des Außenbehälters 10' erzeugt wird. Auch hier ist wieder zur Verstärkung und Abstützung des Innendeckels 4' ein zusätzlicher Innendeckeleinsatz 24 vorgesehen, bei dem man Verstärkungsrippen 26 erkennt, die dafür sorgen, daß die innere Wand des Innendeckels 4 sich nicht verformt, wenn das Innere des Innenbehälters 3 unter Druck steht.

Dieser Einsatz 24 ist also im Prinzip genauso ausgebildet und hat die gleiche Funktion wie der entsprechende Einsatz, der bereits in Verbindung mit den übrigen Figuren beschrieben worden war.

Bei dem Druckbehälter 10' fehlt auch der untere Fuß 11 und der entsprechende Stützflansch 17, der bei dem Druckbehälter 10 vorgesehen war.

Am Deckel 2 erkennt man noch die obere Öffnung für das Einsetzen eines Anschluß- bzw. Armaturelements 5, wobei die Öffnung im Deckel 2 seitliche Aussparungen aufweist, so daß die Armatur bzw. das Anschlußelement nach Art eines Bajonettverschlusses eingesetzt werden kann.

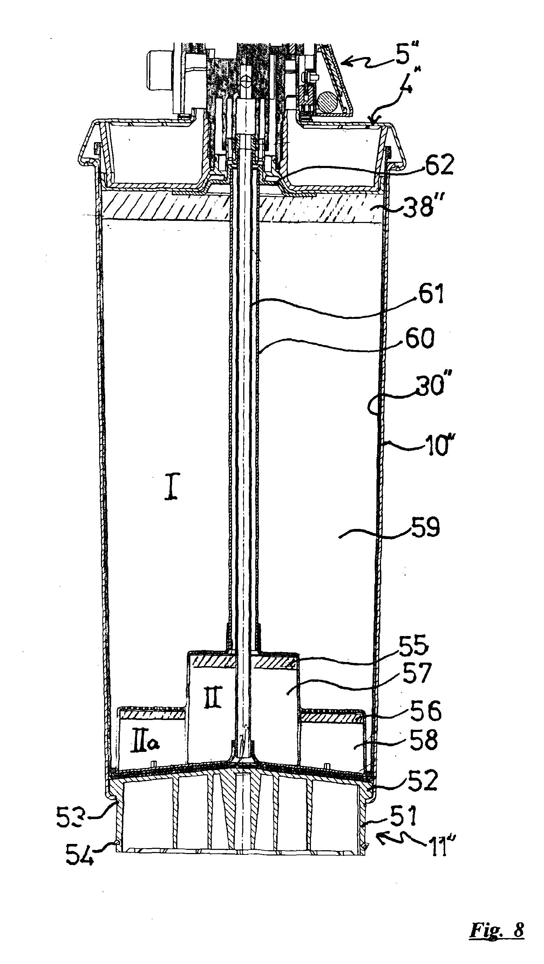

Figur 8 zeigt eine weitere, alternative Ausführungsform der vorliegenden Erfindung. Auch in diesem Fall ist ein Innenbehälter 30" in enger Passung in einen leicht konischen Außenbehälter 10" eingesetzt, wobei die Wandung des Außenbehälters aus einem hinreichend druckfesten Material besteht, wohingegen das Wandmaterial des Innenbehälters 30" gegebenenfalls dünner und auch aus einem weniger stabilen Material hergestellt sein kann, obwohl auch für den Innenbehälter zumindest eine gewisse Formstabilität gegeben sein sollte, solange er nicht unter Druck gesetzt wird.

Im Unterschied zu den vorher beschriebenen Ausführungsformen ist jedoch bei der Ausführungsform gemäß Figur 8 eine sehr große Bodenöffnung vorgesehen, die fast den gesamten Querschnitt im unteren Bereich des Außenbehälters 10" umfaßt, und in welche ein Bodeneinsatz 11" passend eingesetzt ist. Die Öffnung ist kreisförmig und der Innendurchmesser der Öffnung entspricht dem Außendurchmesser eines zylindrischen Fußteiles 51 des Bodeneinsatzes 11", welches nach oben hin nochmals durch einen Ansatz 52 stufenförmig erweitert ist, wobei der stufenförmige Ansatz 52 mit seinem Durchmesser auf den Innendurchmesser im unteren Bereich des Außenbehälters 10" abgestimmt ist, so daß Bodeneinsatz 11" und Außenbehälter 10" zusammen einen unten dicht und lückenlos geschlossenen Hohlraum bilden, in welchen der Innenbehälter 30" eingesetzt werden kann. In diesem Fall ist allerdings der Boden, das heißt die obere Fläche des Bodeneinsatzes 11" aus der Sicht des Behälters 10" leicht konkav ausgebildet. Auch hinsichtlich einiger weiterer Merkmale unterscheidet sich diese Ausführungsform von den zuvor beschriebenen Ausführungsformen. Der Deckel hat im wesentlichen die Form eines Ringes mit kastenförmigem Querschnitt, was noch weitgehend ähnlich zu dem Querschnitt des Deckels der vorher beschriebenen Ausführungsformen ist. Allerdings weist der Behälter keinen Flanschrand auf, sondern am oberen Rand des Behälters sind, ebenso wie am Außenrand des Deckels 4", Verschlußelemente vorgesehen, die hier nur angedeutet sind und die Form eines Bajonettverschlusses haben. In die innere Öffnung des Deckels 4" ist eine Armatur 5" eingesetzt, durch welche Wasser unter Druck von oben in die Filterkammern I und II bzw. IIa eingeleitet wird. Hierzu ist in dem Armaturenkopf 5" ein Verzweigungsventil vorgesehen, welches einen Teil des Wassers durch ein zentrales Außenrohr 60 abwärts leitet, in welchem noch ein inneres Steigrohr 61 konzentrisch angeordnet ist. Ein weiterer Teil des Wassers wird durch das Verzweigungsventil auf eine obere Verteilerplatte 62 geleitet, die das dort eintretende Wasser im wesentlichen gleichmäßig über den gesamten Querschnitt des Behälters verteilt. In dem Filterraum I ist im wesentlichen ein lonenaustauscherharz 59 angeordnet, während in den Filterräumen II und lla im wesentlichen Aktivkohle vorgesehen ist, wobei selbstverständlich auch andere Filtermaterialien verwendet werden könnten. Der Teil des Wassers, welcher durch das äußere Fallrohr 60 abwärts strömt, wird nur durch den Filterraum II geleitet, in welchem Aktivkohle vorhanden ist und gelangt von unten durch eine Siebplatte zu der Eintrittsöffnung des zentralen Steigrohrs 61. Derjenige Teil des Wassers, welcher durch den Filterraum I und das lonenaustauscherharz 59 geleitet wird, tritt im unteren Bereich durch eine mit Öffnungen versehene obere Platte in den Filterraum lla ein, und an der Unterseite dieses Filterraumes IIa durch eine Siebplatte wieder aus, vermischt sich mit dem aus dem Filterraum I austretenden Wasser und strömt ebenfalls durch das Steigrohr 61 nach oben. Die Filtermaterialien 57 und 58 sind, wie bereits erwähnt, Aktivkohle. Auf diese Weise wird ein Teil des Wassers, welches nur durch den Filterraum II hindurchtritt, ausschließlich durch Aktivkohle gefiltert und gegebenenfalls auch entkeimt, wohingegen der andere Teil des Wassers, der durch den Filterraum I und den Filterraum IIa strömt, sowohl enthärtet wird als auch durch Aktivkohle gefiltert und gegebenenfalls entkeimt bzw. keimreduziert wird.

Die Rolle eines Ausgleichselementes wird von Vliespackungen erfüllt, die im oberen Bereich des Filterraumes 1 angeordnet sind und mit 38" bezeichnet sind, wobei entsprechende Vliese auch in den Filterräumen II und lla angeordnet sein können, die dort mit 55 und 56 bezeichnet sind. Insbesondere das Vliesmaterial 38" ist vorzugsweise elastisch nachgiebig, so daß es Volumenänderungen des im Bereich I vorhandenen Filtermaterials 59 ausgleichen kann, die bei lonenaustauscherharz auftreten können, wenn dieses zunächst im trockenen Zustand ist und erstmalig befeuchtet wird.

## Patentansprüche

1. Wasserfilter für unter Druck stehendes Wasser mit einem druckfesten Wasserzulauf und einem Wasserabgang und mit einem druckfesten Aufnahmebehälter für Filtermaterial, welches so angeordnet ist, daß es zwischen Wasserzulauf und Wasserabgang durchströmt wird, dadurch gekennzeichnet, daß der Aufnahmebehälter als druckaufnahmefähiger Außenbehälter (1) mit einer austauschbaren und in dem Außenbehälter (1) aufnehmbaren Innenkartusche (3) ausgebildet ist, wobei die Innenkartusche (3) das Filtermaterial enthält und mit ihrer äußeren Form der inneren Form des Außenbehälters (1) angepaßt ist.

2. Wasserfilter nach Anspruch 1, dadurch gekennzeichnet, daß der Innenbehälter (3) aus einem im Vergleich zum Außenbehälter (3) leichter verformbaren, dünnwandigeren Material als der Außenbehälter (1) besteht.

3. Wasserfilter nach einem der Ansprüche 1 oder 2, dadurch gekennzeichnet, daß der Innenbehälter eine im wesentlichen konvexe äußere Form hat.

4. Wasserfilter nach einem der Ansprüche 1 bis 3, dadurch gekennzeichnet, daß der Innenbehälter aus einem im wesentlichen zylindrischen Hauptteil (30) mit einem abgerundeten ebenen oder leicht konkaven Boden und einem im wesentlichen flachen oberen Deckel (4) mit Zu- und Ablaufführungen besteht.

5. Wasserfilter nach Anspruch 4, dadurch gekennzeichnet, daß der Innenbehälter (3) zur besseren Trennung vom Außenbehälter (1) eine sich geringfügig konisch verjüngende äußere Form hat.

6. Wasserfilter nach einem der Ansprüche 1 bis 5, dadurch gekennzeichnet, daß der Außenbehälter (1) auf seiner Außenseite Verschlußelemente aufweist, welche mit entsprechenden Verschlußelementen, die am äußeren Umfang des Deckels angeordnet sind, im verschlossenen Zustand in Eingriff treten, wobei die Verschlußelemente vorzugsweise als Bajonettverschlußelemente ausgebildet sind.

7. Wasserfilter nach einem der Ansprüche 1 bis 6, dadurch gekennzeichnet, daß der Deckel aus einem ringförmigen Profilteil mit Kastenquerschnitt besteht, dessen Außendurchmesser dem Innendurchmesser des Außenbehälters angepaßt ist und dessen Innendurchmesser zur Aufnahme eines zentralen Zugangs- und/oder Abgangsrohres ausgebildet ist, wobei am oberen äußeren Rand des Kastenprofiles zusätzliche Verschlußelemente angeordnet sind.

8. Wasserfilter nach einem der Ansprüche 1 bis 5, dadurch gekennzeichnet, daß der obere Rand des im wesentlichen zylindrischen Hauptteiles (30) des Innenbehälters (3) einen nach außen ragenden, im wesentlichen ebenen Flanschrand aufweist, wobei der Deckel (4) mit seinem äußerem Rand auf diesem Flanschrand (32) aufliegt.

9. Wasserfilter nach Anspruch 8, dadurch gekennzeichnet, daß der Deckel (4) eine ringförmige, zylindrische Einsenkung (44) aufweist, deren Außendurchmesser gleich dem Innendurchmesser des oberen Abschnittes des Innenbehälters (30) ist, und an dessen oberen Ende ein nach außen ragender Flanschrand des Deckels angeordnet ist, der im zusammengefügten Zustand auf dem Flanschrand (32) des Innenbehälters (30) aufliegt.

10. Wasserfilter nach Anspruch 9, dadurch gekennzeichnet, daß auch der Außenbehälter (10) einen oberen Flanschrand (12) aufweist, ebenso wie der äußere Deckel (2), wobei im zusammengesetzten Zustand von Außen- und Innenbehälter die aufeinanderliegenden Flansche (32, 42) des Innenbehälters (3) und des inneren Deckels (4) durch die Flansche (12, 22) des Außenbehälters (1) und des Außenbehälterdeckels (2) zusammengepreßt werden.

11. Wasserfilter nach Anspruch 10, dadurch gekennzeichnet, daß die Flansche des Außenbehälters (1) und des zugehörigen Deckels (2) durch einen die Flanschränder (12, 22) radial und axial umgreifenden Spannring in (6) zusammengehalten werden.

12. Wasserfilter nach einem der Ansprüche 1 bis 11, dadurch gekennzeichnet, daß getrennt von dem Innen- und dem Außenbehälter (3, 1) eine Zulauf- und Abgangsarmatur vorgesehen ist.

13. Wasserfilter nach Anspruch 12, dadurch gekennzeichnet, daß Meßelemente für die Menge hindurchströmenden Wassers und gegebenenfalls Einstellventile an der Armatur (5) vorgesehen sind.

14. Wasserfilter nach Anspruch 12 oder 13, dadurch gekennzeichnet, daß am Deckel (4) für den Innenbehälter und an der diesem Deckel zugewandten Seite der Armatur (5) Verbindungselemente für die Herstellung abgedichteter Strömungsübergänge vorgesehen sind.

15. Wasserfilter nach einem der Ansprüche 12 bis 14, dadurch gekennzeichnet, daß an dem Deckel (2) des Außenbehälters eine Durchgangsöffnung für die Verbindungselemente zwischen Armatur und Deckel (4) des Innenbehälters, sowie Befestigungselemente für die mechanische Befestigung und Halterung der Armatur am Außen- und am Innenbehälter (1, 3) vorgesehen sind.

16. Wasserfilter nach Anspruch 15, dadurch gekennzeichnet, daß das Befestigungselement an der Armatur und am Deckel (2) des Außenbehälters als Bajonettverschluß ausgebildet sind.

17. Wasserfilter nach einem der Ansprüche 1 bis 16, dadurch gekennzeichnet, daß am Boden (13) des Außenbehälters (1) eine Öffnung (14) vorgesehen ist, durch welche die untere Außenfläche des Innenbehälters (3) zugänglich wird.

18. Wasserfilter nach Anspruch 17, dadurch gekennzeichnet, daß an der Unterseite des Innenbehälters ein in die Öffnung (14) am Boden (13) des Außenbehälters (1) ein am Boden (3) ausgebildeter Ausstoßzapfen (34) hineinragt.

19. Wasserfilter nach Anspruch 17, dadurch gekennzeichnet, daß die Öffnung (14) nahezu den gesamten Querschnitt am unteren Ende des Außenbehälters erfaßt, wobei ein Bodeneinsatz die Öffnung verschließt und wobei der Bodeneinsatz ein im wesentlichen zylindrisches, sich durch die Öffnung hindurcherstreckendes Fußteil und eine darüber angeordnete und im Inneren des Außenbehälters passend aufgenommene zylindrische Erweiterung aufweist.

20. Wasserfilter nach Anspruch 19, dadurch gekennzeichnet, daß der Bodeneinsatz in der Öffnung des Außenbehälters axial verschiebbar ist und daß am Außenumfang des zylindrischen Fußteils mindestens ein Rastelement vorgesehen ist, welches unterschiedliche Axialpositionen des Bodeneinsatzes in der Öffnung des Außenbehälters voneinander trennt.

21. Wasserfilter nach Anspruch 20, dadurch gekennzeichnet, daß das Rastelement als umlaufender, in einer Nut des zylindrischen Fußes aufgenommener O-Ring ausgebildet ist, wobei zwei derartige Rastelemente axial voneinander beabstandet vorgesehen sind und die Tiefe der Nuten etwas geringer ist als die Dicke des O-Ringes.

22. Wasserfilter nach einem der Ansprüche 1 bis 7, dadurch gekennzeichnet, daß ein Außendeckel des Außenbehälters an seinem unteren Rand ein Innengewinde aufweist, während der Außenbehälter an seinem oberen Rand ein hierzu passendes Außengewinde aufweist.
